# EUROPÄISCHE PATENTSCHRIFT

(11) **EP 3 497 043 B1**
(45) Veröffentlichungstag und Bekanntmachung des Hinweises auf die Patenterteilung: **21.12.2022**
(21) Anmeldenummer: 17755450.8
(22) Anmeldetag: 09.08.2017
(51) Int. Cl.: B65G 57/00, B65G 61/00

(54) **BELADESYSTEM ZUM PALETTIEREN VON GEMISCHTEN PRODUKTEN AUF EINER ZIELPALETTE**
LOADING SYSTEM FOR PALLETING MIXED PRODUCTS ON A TARGET PALLET
SYSTÈME DE CHARGEMENT POUR LA PALETTISATION DE PRODUITS MÉLANGÉS SUR UNE PALETTE CIBLE

(30) Priorität: 09.08.2016 DE 102016114730; 23.08.2016 DE 102016115656
(43) Veröffentlichungstag der Anmeldung: 19.06.2019
(73) Patentinhaber: Fellner, Herbert, 93059 Regensburg (DE); Brandmüller, Ludwig, 83026 Rosenheim (DE)
(72) Erfinder: Fellner, Herbert, 93059 Regensburg (DE); Brandmüller, Ludwig, 83026 Rosenheim (DE)
(74) Vertreter: Winter, Brandl - Partnerschaft mbB
(86) Internationale Anmeldenummer: PCT/EP2017/070230
(87) Internationale Veröffentlichungsnummer: WO 2018/029268

(56) Entgegenhaltungen:
- EP-A1- 0 511 529
- EP-A1- 2 072 430
- EP-A1- 2 330 060
- EP-A2- 2 769 341
- WO-A1-2011/054053
- DE-A1- 3 814 101
- US-A- 4 927 318
- US-A- 5 738 484
- US-A1- 2008 257 684

## Beschreibung

Die Erfindung betrifft ein Beladesystem zum Palettieren von unterschiedlichen Produkten auf einer Zielpalette

Insbesondere bei großen Handelsketten und Discountern ist für die Verteilung der Waren auf ihre Verkaufszentren oder Verkaufsfilialen ein hoher logistischer Aufwand erforderlich. Üblicher Weise werden dabei in großen Verteilzentren mit entsprechenden Hochregallagern die sortenreinen Produkte auf so genannten Kundentrays zwischengelagert. Diese Produkte werden herstellerseitig auf Herstellerpaletten lagenweise sortenrein an das Verteilzentrum angeliefert - für die Zwischenlagerung ist es dann erforderlich, die sortenreinen Paletten lagenweise zu entpalettieren. Eine derartige Entpalettierung von Hand ist mit einem enormen Personalaufwand verbunden. Zur Vereinfachung wird in der EP 2 794 439 B1 der Anmelderin ein automatisiertes Entpalettiersystem vorgeschlagen, bei dem eine reibschlüssig wirkende Entnahmeeinheit und eine Vakuumentnahmeeinheit alternativ oder gemeinsam verwendbar sind, um eine Produktlage von einem Stapel sortenreiner Produkte abzuheben.

Zur Auslieferung an die Filialen/Verkaufszentren werden dann die zwischengelagerten sortenreinen Produkte zur Auslieferung an die Filialen/Verteilzentren auf Kommissionierpaletten zusammengestellt. Im Unterschied zu der vorbeschriebenen Entpalettierung erfolgt dieses Kommissionieren derzeit nahezu ausschließlich von Hand. Bedingt durch arbeitsrechtliche Vorschriften - so ist beispielsweise vom Gesetzgeber die maximal während einer Schicht zu hebende Gesamtlast auf 3000 kg/Person beschränkt - ist das manuelle Kommissionieren sehr personalintensiv, des Weiteren bestehen extrem hohe Anforderungen an die Packqualität und ein hoher Kostendruck.

Bei dieser manuellen Kommissionierung spielt die Erfahrung der Kommissionierer eine erhebliche Rolle, da die einzelnen Produkte auf der Zielpalette derart zu positionieren sind, dass der Produktstapel zum einen relativ stabil ist und zum anderen die Produkte nicht beschädigt werden. Beispielsweise beim Kommissionieren von Obst, Gemüse oder dergleichen haben die dabei verwendeten Trays Stapelnasen, die in entsprechende Ausnehmungen des im Produktstapel darüber oder darunter liegenden Trays eingreifen, um diese relativ zu einander zu positionieren. Das Stapeln derartiger Trays erfolgt derzeit ausschließlich von Hand.

Ein weiteres Problem bei der Kommissionierung besteht darin, dass die Produkte auf der Zielpalette in einer bestimmten Reihenfolge lagepositioniert werden müssen, so dass dann beispielsweise im Ladengeschäft die Produkte ohne Hin- und Herfahren in die Regale eingeräumt werden können. Aus diesem Grund werden bei Discountern üblicherweise die Produkte innerhalb der Verkaufsräume nach einer bestimmten Reihenfolge aufgestellt, die auch dem Kunden geläufig ist, so dass er das jeweilige Produkt schnell auffinden kann. Dementsprechend müssen die Collis/Produkte in Abhängigkeit von dieser Anordnung im Verkaufsraum auf der Zielpalette positioniert werden.

Diese komplexe Aufgabenstellung lässt sich bisher nur von einem erfahrenen Kommissionierer lösen. Maschinelle Lösungen, wie sie im Folgenden beschrieben sind, sind hierzu nicht geeignet.

So zeigt die US 8,074,431 B1 ein Beladesystem, bei dem die Produkte über eine Zuführbahn zugeführt werden und dann mittels eines Greiferkopfes auf einem Gitterrost abgelegt werden. Dabei werden die Produkte schichtweise auf dem Gitterrost angeordnet und dann nach Aufbau der Schicht/Lage an eine Zielpalette übergeben. Prinzipiell ist es mit einer derartigen Lösung auch möglich, auf dem Gitterrost einen mehrlagigen Produktstapel auszubilden, der dann im Ganzen an die Zielpalette übergeben wird.

In dem Fall, in dem Produkte mit unterschiedlichen Abmessungen und somit auch mit unterschiedlichen Stapelnasenpositionen vorliegen, kann eine derartige automatisierte Lösung nicht verwendet werden, da der schichtweise Aufbau in der vorbeschriebenen Reihenfolge eine Relativpositionierung der Stapelnasen zu den Stapelausnehmungen bei unterschiedlichen Produkttypen ausschließt.

Die US 2010/0146907 A1 offenbart ein Beladesystem, bei dem anstelle eines Gitterrostes eine teilbare Beladeplatte verwendet wird, auf der die Produkte schichtoder lagenweise abgelegt und dann an eine Zielpalette übergeben werden. Dieses Beladesystem zeigt die gleichen Nachteile wie die zuvor beschriebene Lösung.

In der JP 2011 251 837 A ist ein Beladesystem mit einem Gabelkopf gezeigt - ein derartiger Gabelkopf ist für Kommissionieraufgaben der vorbeschriebenen Art ungeeignet.

In der US 2008 267 759 ist ein Beladesystem gezeigt, bei dem die Produkte Schicht für Schicht direkt auf einer Zielpalette abgelegt werden.

Die DE 10 2013 003 768 E1 zeigt eine Beladesystem mit einem Gabelkopf, der mit einer Messerkante ausgeführt sein kann. Ein derartiger Gabelkopf ist - wie vorstehend zur JP 2011 251 837 A ausgeführt - nicht geeignet, um die eingangs erläuterten Kommissionieraufgaben zu erfüllen, sondern wird vorzugsweise bei Trockengut eingesetzt.

Die WO 2012/019 591 A2 zeigt ein Beladesystem, bei dem ein umfangsseitig an einem Gebinde/Produkt angreifender Greiferkopf mit einer Stapelablage zusammenwirkt, die eine geneigte Grundfläche und eine Zentrierstange zum Stapeln der Kommissionsware hat.

Die DE 38 14 101 A1 zeigt schließlich ein Beladesystem zum Palettieren von gemischten Produkten auf einer Zielpalette. Dieses bekannte Beladesystem weist einen Packmustergenerator auf, der das Beladesystem nach einem Packmuster steuert, das von der Art der auf der Zielpalette abzulegenden Produkte abhängt; ferner sind zwei Zuführbahnen für die zu palettierenden Produkte sowie zwei Stapler vorgesehen, welche in einer vorgegebenen Sequenz mindestens ein Produkt von einer der Zuführbahnen abnehmen und auf einer Oberfläche stapeln. Die Stapler sind in der Lage, zwei Produktstapel auf dieser Oberfläche anzuordnen. Die so angeordneten Produktstapel werden dann von einem Schieber auf eine Bodenplatte geschoben, welche zur Übergabe der Produktstapel an die Zielpalette in Horizontalrichtung unter den Produktstapeln weggefahren werden kann.

Auch mit einer derartigen Lösung lassen sich komplexere Kommissionieraufgaben nicht erfüllen.

Dementsprechend liegt der Erfindung die Aufgabe zugrunde, ein Beladesystem zu schaffen, mit dem der Kommissioniervorgang vereinfacht ist.

Diese Aufgabe wird durch ein Beladesystem mit den Merkmalen des Patentanspruches 1 gelöst.

Vorteilhafte Weiterbildungen der Erfindung sind Gegenstand der Unteransprüche.

Das erfindungsgemäße Beladesystem dient zum Palettieren der zu kommissionierenden Artikel/Produkte - auch Collis genannt - auf einer Zielpalette. Dementsprechend hat das Beladesystem zumindest zwei Zuführbahnen/-bänder für die zu palettierenden Produkte. Diese werden nach einem vorbestimmten Planungsalgorithmus (Packmustergenerator) mittels eines Greiferkopfes von den Zuführbahnen entnommen und auf einer wegfahrbaren oder teilbaren Beladeplatte abgesetzt. Dabei werden über den Greiferkopf die Produkte zu Türmen gestapelt (Produktstapel).

Die Beladeplatte ist in unmittelbarer Nachbarschaft zu der Zielpalette angeordnet, so dass die Produktstapel dann auf einfache Weise von der Beladeplatte an die Zielpalette übergeben werden können. In einem sich anschließenden Schritt kann dann die kommissionierte Zielpalette, d.h. die mit den unterschiedlichen Produkten beladene Zielpalette, mit einer geeigneten Transportsicherung versehen und ausgeschleust werden.

Mittels des erfindungsgemäßen Beladesystems mit zumindest zwei Zuführbahnen für die gemischten Produkte, mit zumindest einem Greiferkopf, der ausgelegt ist, in einer Sequenz nach einem Planungsalgorithmus die Produkte von den Zuführbahnen abzunehmen sowie mit einer Beladeplatte, auf der die Produkte in mehreren Produktstapeln abgelegt werden können und die ausgelegt ist, die Produktstapel an die Zielpalette zu übergeben, kann der Kommissioniervorgang weitestgehend vollautomatisch erfolgen, ohne dass ein manueller Eingriff erforderlich ist.

Die Produktstapel können dabei beispielsweise so ausgebildet werden, dass in diesen jeweils individuell Trays mit den eingangs beschriebenen Stapelnasen/Stapelausnehmungen gestapelt werden, wobei die Stapelreihenfolge in den einzelnen Produktstapeln individuell an die jeweilige Kommissionieraufgabe angepasst werden kann. Erst wenn die einzelnen Produktstapel auf die vorbestimmte Höhe, beispielsweise 2 m, gebracht sind, werden diese dann vorzugsweise über eine Zentriereinrichtung zusammengeschoben und an die Zielpalette übergeben.

Diese Vorgehensweise unterscheidet sich grundlegend von den eingangs beschriebenen, bekannten automatisierten Kommissionierverfahren, bei denen eine einzige Produktlage auf dem Gitterrost oder der Beladeplatte positioniert und dann lageweise an die Zielpalette übergeben wird.

Dementsprechend kann das Kommissionieren bei erheblich verringertem Personalbedarf schneller als bei herkömmlichen Lösungen durchgeführt werden. Mit dem erfindungsgemäßen System kann die Kommissionierung bspw. mit 500 Takten pro Stunde durchgeführt werden.

Beim einem Ausführungsbeispiel der Erfindung ist die von der Beladeplatte bereit gestellte Fläche größer als die Fläche der Zielpalette ausgeführt - auf diese Weise ist es möglich, die Produktstapel in einem gewissen Abstand zu einander auf der Beladeplatte zu stapeln.

Bevorzugt werden die Produktstapel Schicht für Schicht aufgebaut. Die Produktstapel "wachsen" somit in etwa parallel. Eine Schicht eines Produktstapels kann mehrere Produkte/Collis aufweisen, die vom Greiferkopf in einem Arbeitsgang von der Zuführbahn entnommen und auf der Beladeplatte abgelegt werden.

Prinzipiell kann auch vorgesehen sein, mehrere kleinere Collis auf einer Pufferstation abzulegen und dann zusammen zu schieben, so dass das Maß dieser Collis der Grundfläche eines größeren Produktes entspricht. Die zusammengeschobenen Collis werden dann mittels des Greiferkopfes von der Pufferstation auf dem Produkt-Turm abgelegt.

Bei einem besonders bevorzugten Ausführungsbeispiel ist das Beladesystem mit einer Zentriereinrichtung zum Zusammenschieben der Produktstapel ausgeführt. Die vorzugsweise beim Stapeln zu einander beabstandeten Produktstapel werden mittels dieser Zentriereinrichtung kompaktiert, so dass die Übergabe an die Zielpalette vereinfacht ist.

Eine derartige Zentriereinrichtung kann beispielsweise fünf Schiebewände aufweisen, die zum Zusammenschieben der Produktstapel und zum Ausschleusen der beladenen Zielpalette verschiebbar und/oder verschwenkbar sind.

Erfindungsgemäß ist die Beladeplatte zur Übergabe an die Zielpalette in Horizontalrichtung unter den Produktstapeln wegfahrbar oder teilbar. Dabei wird es bevorzugt, wenn diese Produktstapel von einer geeigneten Einrichtung, vorzugsweise von der vorgenannten Zentriereinrichtung während der Übergabe lagefixiert sind.

Der Greiferkopf ist bei einem Ausführungsbeispiel des erfindungsgemäßen Beladesystems ähnlich wie beim Stand der Technik gemäß der WO 2012/019 591 A2 mit zumindest vier rechtwinklig zu einander angeordneten Greiferplatten ausgeführt, die zum Greifen des oder der Produkte(s) oder eines Produktstapels in seitliche Anlage an diesen bringbar sind.

Der Greiferkopf ist vorzugsweise in X-, Y- und/oder Z-Richtung verfahrbar und mit einer Rotationsachse C ausgeführt, so dass ein Greiferkopf mehreren Zuführbahnen zugeordnet werden kann.

Bei einem bevorzugten Ausführungsbeispiel der Erfindung sind vier Zuführbahnen vorgesehen, denen zwei unabhängig ansteuerbare Greiferköpfe zugeordnet werden.

Die Abstützung der Produkte während des Entnehmens von der Zuführbahn und des Absetzens auf der Beladeplatte ist verbessert, wenn den Greiferplatten eine verfahrbare Einrichtung zum Abstützen des Produktes bzw. des Produktstapels zugeordnet ist.

Bei einem besonders bevorzugten Ausführungsbeispiel der Erfindung ist diese Einrichtung derart ausgeführt, dass sie beim Absenken des Greiferkopfes den bereits vorhandenen Produktstapel mit Bezug zu dem darauf abzulegenden Produkt zentriert. Dadurch ist sichergestellt, dass der Produktstapel passgenau aufgebaut werden kann. Bei manchen Produkten vorgesehene Stapelnasen tauchen dann in eine entsprechende Stapelausnehmung des im Produktstapel benachbarten Produktes ein - eine derartige Relativpositionierung wird durch die erfindungsgemäße Lösung auch automatisch ermöglicht.

Bei einem Ausführungsbeispiel der Erfindung ist diese Einrichtung durch Zentrierwinkel gebildet, wobei im Bereich jeder Greiferplatte ein derartiger Zentrierwinkel vorgesehen ist. In einer Zentrierposition stehen diese Zentrierwinkel vorzugsweise als sich etwa konisch öffnender Zentrierrahmen in Richtung zum Produktstapel vor, wobei dieser Zentrierrahmen zunächst eine größere lichte Weite als die Grundfläche des Produktes hat, so dass beim Absenken des Greiferkopfes der Zentrierrahmen auf den bereits abgelegten Produktstapel aufläuft und diesen in Richtung zu dem im Greiferkopf gehaltenen Produkt ausrichtet.

Prinzipiell kann über geeignete Sensoren auch die Relativposition des Produktstapels mit Bezug zum Greiferkopf erfasst werden, so dass dann durch entsprechende Ansteuerung des Greiferkopfes die Zentrierung erfolgt.

Die Zentrierwinkel können dann zum Abstützen des Produktes in eine Stützposition verfahren werden.

Bei einer Variante des Greiferkopfes sind diese Zentrierwinkel dann in einer entsprechenden Kulisse eines Greiferarmes geführt, entlang der die Zentrierwinkel aus ihrer Zentrierposition in die Stützposition und umgekehrt verfahrbar sind.

Das Verfahren kann beispielsweise mittels eines geeigneten Linearantriebes erfolgen, der den Zentrierwinkel entlang der Kulisse verfährt, so dass dieser einen Vertikal- und Kipphub ausführt, wenn er von der Zentrierposition in die Stützposition verfahren wird.

In dem Fall, in dem die Produkte eine etwa rechteckförmige Grundfläche, wie beispielsweise Gemüsetrays haben, können an der Längsseite zwei benachbarte Greiferplatten oder eine Greiferplatte mit größerer Querschnittsfläche als diejenigen Greiferplatten ausgeführt sein, die an der kürzeren Seitenfläche des Trays angreifen.

Die Greiferplatten sind vorzugsweise paarweise über einen gemeinsamen Antrieb synchron antreibbar.

Bei einem weiteren Ausführungsbeispiel des Greiferkopfes ist im Bereich der Zentrierwinkel eine Sensoranordnung vorgesehen, über die die Höhe des bereits abgelegten Produktstapels erfassbar ist.

Die Zentrierwinkel des Zentrierrahmens können so ausgeführt sein, dass sie vollständig in den Greiferarm einfahren, an dem die Greiferplatten gehalten sind. Dementsprechend werden diese Zentrierwinkel nur bei Produkten in Wirkeingriff gebracht, bei denen eine Vorzentrierung des Produktstapels mit Bezug zum Produkt (oder umgekehrt) erforderlich ist.

Bei einer alternativen Lösung, die nicht Teil der vorliegenden Erfindung ist, ist das Beladesystem mit einem Gabelkopf ausgeführt, der nach Vorgabe des Packmustergenerators die Produkte direkt auf einer Zielpalette ablegt.

Dieser Gabelkopf kann mit einer "Messerkante" ausgeführt sein, wie sie in der eingangs genannten EP 2 794 439 B1 vorgesehen ist.

Bei dieser Alternative erfolgt die Lagefixierung der auf der Zielpalette abgelegten Produktlagen mittels einer geeigneten Transportsicherung. Diese kann beispielsweise ein höhenverstellbarer Folienringwickler sein.

Auch hochkomplexe Kommissionieraufgaben lassen sich mit einem Beladesystem bewältigen, das sowohl mit einem Greiferkopf als auch mit einem Gabelkopf ausgeführt ist, die je nach Art der zu kommissionierenden Produkte in Wirkeingriff gebracht werden.

Der Algorithmus zur Erzeugung der Kommissionieraufträge und zur Erzeugung des Packmusters (Packmustergenerator) ist in die Steuerung des Beladesystems integriert.

Dabei kann über den Packmustergenerator vor der Durchführung der Kommissionierung eine virtuelle Darstellung der beladenen Zielpalette erstellt werden, anhand der ein Maschinenführer oder dergleichen das generierte Packmuster auf Plausibilität überprüfen kann. Anhand dieser graphischen Darstellung kann auch der Fortschritt des Kommissioniervorgangs überwacht werden.

Da diese Maschinenführer/Kommissionierer große Erfahrung haben, können diese das Packmuster auf Plausibilität hin überprüfen und ggf. manuell eingreifen, falls dieses Packmuster nicht den Vorstellungen entspricht. Dabei ist es beispielsweise möglich, anhand eines Touchscreens das Packmuster in der grafischen Darstellung anzupassen. Der Speicher des Packmustergenerators ist dabei so ausgelegt, dass diese Erfahrungswerte der Maschinenführer abgelegt werden und dann beim nächsten ähnlichen Kommissionierauftrag mit in die Erzeugung des jeweiligen Packmusters eingehen.

Für den Fall, dass die Zielpalette Abmessungen oder einen Aufbau hat, so dass sie nicht über die Palettentransportbahn unter die Beladeplatte verfahren werden kann, wird ein alternatives Transportmittel, beispielsweise ein mit einer Teleskopgabel ausgeführter Transportwagen verwendet, der die Zielpalette/Leerpalette aufnimmt und zum Beladen unter die Beladeplatte gefahren wird. Das Ein- und Ausschleusen kann dann wahlweise von der Zuführseite der Leerpalette oder auch von der Ausschleuseseite her erfolgen. Die Anmelder behalten sich vor, auf die Verwendung eines derartigen alternativen Palettentransportmittels einen eigenen Anspruch zu richten.

Bevorzugte Ausführungsbeispiele der Erfindung werden im Folgenden anhand schematischer Zeichnungen näher erläutert. Es zeigen:
Figur 1 eine dreidimensionale Darstellung eines Ausführungsbeispiels eines erfindungsgemäßen Beladesystems;
Figur 2 eine Rückansicht des Beladesystems gemäß Figur 1;
Figur 3 eine Draufsicht auf das Beladesystem gemäß Figur 1;
Figur 4 eine Variante eines Greiferkopfes für ein Beladesystem gemäß den Figuren 1 bis 3;
Figur 5 Trays eines Produktstapels, der mittels eines Greiferkopfes gemäß Figur 4 aufgebaut wird;
Figur 6 eine Unteransicht des Greiferkopfes gemäß Figur 4;
Figur 7 eine Seitenansicht des in Figur 4 dargestellten Greiferkopfes von rechts her gesehen und
Figur 8 eine Teleskopgabel zum alternativen Ein- und Ausschleusen einer Zielpalette.

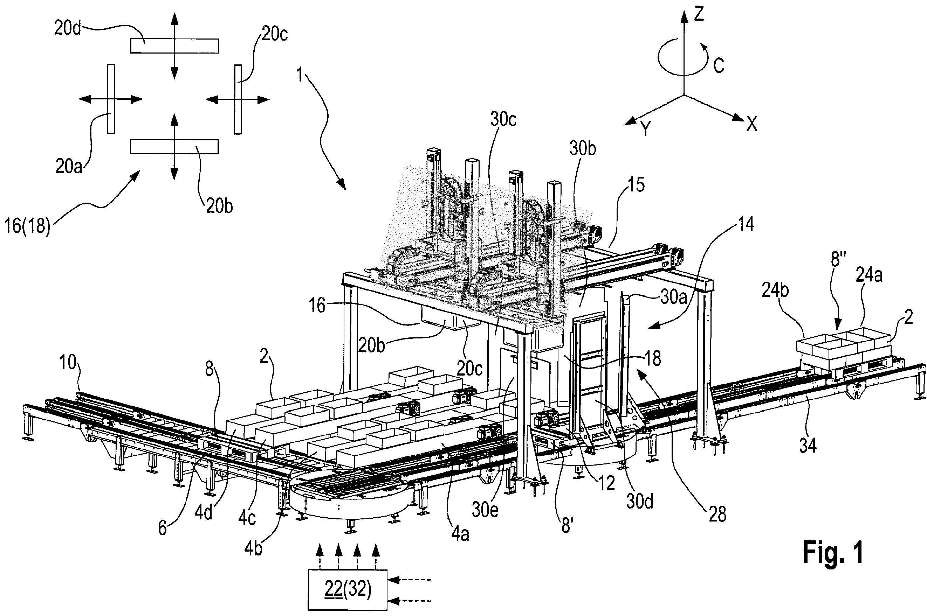

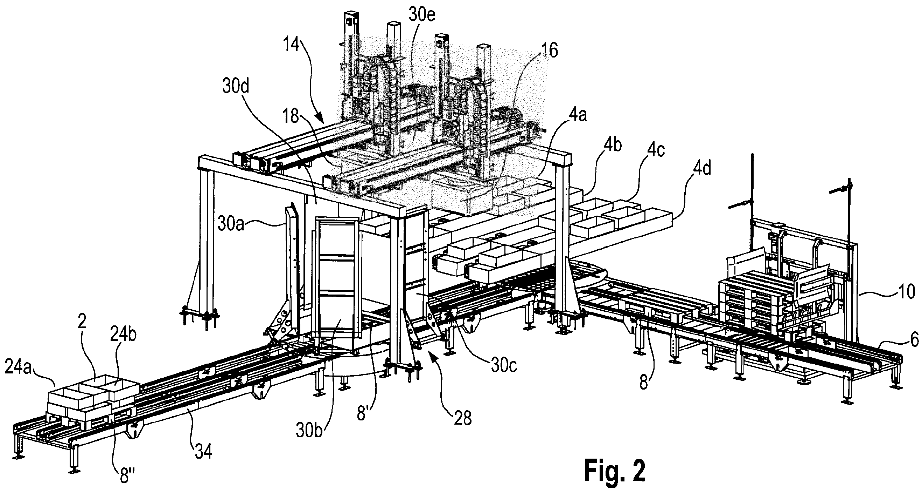

Gemäß den Figuren 1 bis 3 werden die mittels des erfindungsgemäßen Beladesystems 1 zu kommissionierenden Produkte 2 (Collis), beispielsweise Obst- und Gemüsesteigen aus dem eingangs beschriebenen Zwischenlager auf vier Zuführbahnen oder -bändern 4a, 4b, 4c und 4d bereitgestellt. In einer Ebene unterhalb der Zuführbahnen 4 ist ein Palettentransportband 6 vorgesehen, über das gemäß Figur 2 eine Zielpalette 8, die von einem Palettenmagazin 10 vereinzelt wird, über eine 90°-Umlenkung in eine Beladeposition gebracht wird, die in der Darstellung gemäß Figur 1 mit dem Bezugszeichen 8' gekennzeichnet ist.

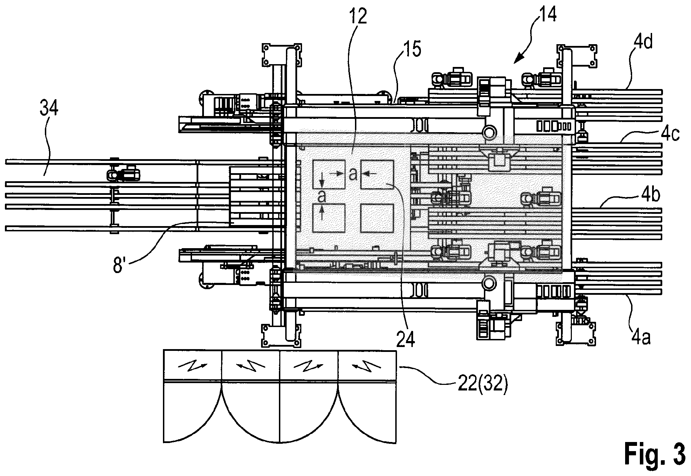

In dieser Beladeposition befindet sich die Zielpalette 8' unterhalb einer teilbaren Beladeplatte 12, die besonders gut in Figur 3 sichtbar ist. In dieser Darstellung fährt die Zielpalette 8' gerade in die Position unterhalb der Beladeplatte 12 ein. Wie aus dieser Darstellung entnehmbar, ist dabei die Grundfläche, d.h. die zu beladende Fläche der Beladeplatte 12 deutlich größer als die Grundfläche der Palette 8' ausgeführt. Diese Beladeplatte 12 ist - wie im Folgenden noch näher erläutert wird - in Horizontalrichtung verfahrbar oder teilbar innerhalb einer Kommissioniereinheit 14 geführt. Diese hat ein Portal 15, an dem über eine X-, Y- und/oder Z-Führung zwei über Linearantriebe verstellbare Greiferköpfe 16, 18 angeordnet sind. Die Greiferköpfe 16, 18 lassen sich des Weiteren noch über eine Rotationsachse C (siehe Figur 1) verschwenken, um diese zum Produkt 2 ausrichten zu können.

Dadurch, dass zwei Greiferköpfe 16, 18 parallel eingesetzt werden, können diese den kompletten Palettenbauraum sowie alle Aufnahmepositionen der Zuführbahnen 4 unabhängig von einander erreichen. Bei Bauraumüberschneidung wird ein Greiferkopf 16, 18 in die jeweilige Warteposition gefahren, so dass der andere Greiferkopf 16, 18 die Zielposition auf der Beladeplatte 12 erreichen kann. Im Fehlerfall kann mindestens ein Greiferkopf 16, 18 mit dem zugeordneten Greiferkopfportal die Palettierung bei halbierter Leistung fortsetzen.

Aufgrund der insgesamt acht Colli-Aufnahmepositionen verteilt über vier parallele Zuführbahnen 4 sowie den optional neben dem Portal 15 mit den beiden Greiferportalen vorsehbaren Pufferpositionen und einer Auftragspalettenhöhe von beispielsweise 2000 mm kann das Beladesystem bei einer hohen Kommissionierleistung sehr kompakt ausgeführt werden. Die Pufferpositionen können ebenerdig und ohne zusätzliche Zentrierhilfen anfahrbar sein. Diese Pufferpositionen werden zur Unterstützung der sequenzgerechten Bereitstellung von Collis für den Bau der Auftragspalette genutzt. Wie eingangs erläutert, werden kleinere Collis, die beispielsweise die halbe oder ein Viertel der Grundfläche der vorbeschriebenen Produkte/Collis aufweisen, zunächst im Abstand zu einander positioniert und dann mittels des Greiferkopfes zusammengeschoben, so dass sie in dieser zusammengeschobenen Anordnung die Fläche eines größeren Produktes aufweisen. Diese zusammengeschobene Lage der kleineren Collis wird dann mittels des Greiferkopfes auf den bereits aufgebauten Produktstapel aufgelegt, so dass entsprechend zwei oder vier kleinere Collis auf einem größeren Produkt/Tray zu liegen kommen.

Insbesondere bei Obst- oder Gemüse-Trays ist es vorteilhaft, wenn der Greifer noch eine Rückhalteplatte hat, die das Gemüse/das Obst während des Stapelvorgangs niederhalten.

Die vorbeschriebenen Greiferportale sind mit Riemen getriebenen Linearachsen versehen, so dass eine sehr gute Wiederholgenauigkeit im Bereich von +/- 2 mm gewährleistet ist.

Wie in Figur 1 oben links angedeutet, hat bei dem dargestellten Ausführungsbeispiel jeder Greiferkopf 16, 18 jeweils vier Greiferplatten 20a, 20b, 20c, 20d, die rechtwinklig zu einander angestellt sind und somit in der Draufsicht in etwa ein Rechteck (zumindest abschnittsweise) ausbilden. Die Greiferplatten 20 sind in Abhängigkeit von der Geometrie der Produkte 2 in Pfeilrichtung (siehe Figur 1 oben links) auseinander oder aufeinander zu verfahrbar, um in seitliche Anlage an die Außenwandung des Produktes 2, beispielsweise einer Obst-/Gemüsesteige gebracht zu werden. Diese Verschiebebewegung erfolgt so, dass durch Kraft- oder Reibschluss eine hinreichende Haltekraft aufgebracht werden kann, um das Produkt 2 jeweils zu halten.

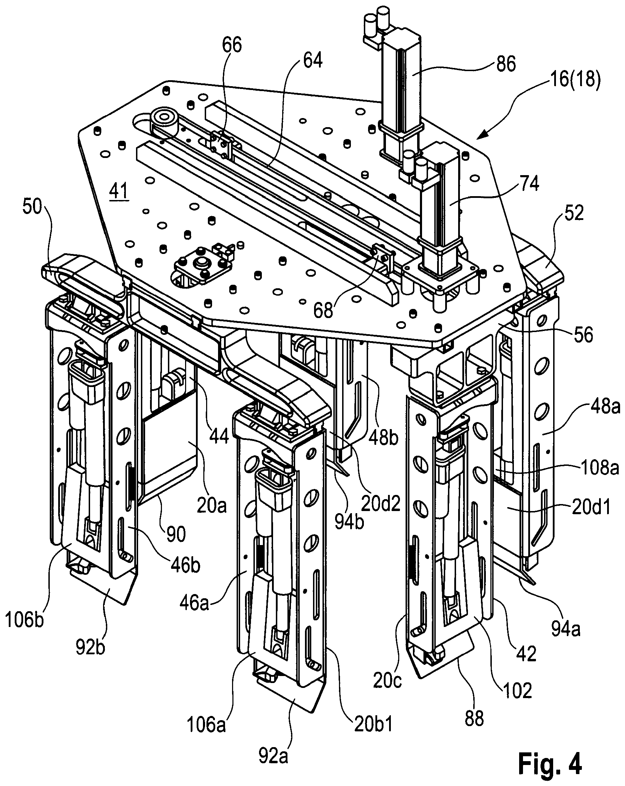

In den dreidimensionalen Darstellungen gemäß den Figuren 1 und 2 sind jeweils nur zwei der Greiferplatten, beispielsweise die Greiferplatten 20b, 20c des Greiferkopfes 16 sichtbar. Auch die Antriebe zur Verstellung der Greiferplatten 20 sind nicht dargestellt. Hinsichtlich weiterer Details wird auf die im Folgenden beschriebenen Figuren 4 bis 7 verwiesen.

Zur Ansteuerung des Beladesystems 1 ist gemäß Figur 3 eine Steuereinheit 22 mit integriertem Packmustergenerator 32 vorgesehen, in der nach dem eingangs genannten Algorithmus zur Erzeugung der Kommissionieraufträge ein vorbestimmtes Packmuster berechnet wird, nach dem die Produkte 2 auf der Beladeplatte 12 / Zielpalette 8 abgelegt werden sollen. In Abhängigkeit von diesem Packmuster werden dann die Greiferköpfe 16, 18 angesteuert, um die Produkte 2 in der vorbestimmten Sequenz von den Zuführbahnen 4a, 4b, 4c und 4d abzunehmen und auf der Beladeplatte 12 abzulegen. Dabei werden die Produkte 2, beispielsweise die Obst- und Gemüsesteigen zu Türmen gestapelt (Produktstapel). Dieses Stapeln erfolgt schichtweise derart, dass die Produktstapel sozusagen parallel "wachsen". Dabei kann es jedoch durchaus sein, dass bei einem Produktstapel ein höheres Produkt oder mehrere Produkte gleichzeitig abgelegt werden, so dass die Produktstapelhöhe der Vielzahl von Produktstapeln in gewissem Maße variieren kann.

Die einzelnen Produktstapel auf der Beladeplatte 12 sind zunächst zu einander beabstandet, um den Greiferplatten 20 der Greiferköpfe 16, 18 Raum zum Einfahren in die Zwischenräume zwischen den Produktstapeln zu schaffen. Auf diese Weise können beispielsweise ein bis acht, vorzugsweise vier Produktstapel/Türme auf der Beladeplatte 12 abgesetzt werden. Diese Türme sind in der Darstellung gemäß Figur 3 mit dem Bezugszeichen 24 versehen. Wie erwähnt, sind diese Türme 24 mit dem Abstand a zu einander beabstandet, um Raum zum Einfahren des Greiferkopfes 16, 18 zu geben.

Wie erläutert, können durch einen Hub des Greiferkopfes 16, 18 auch mehrere Produkte als Zwischenstapel von den Zuführbahnen 4 abgenommen und auf der Beladeplatte 12 abgelegt werden.

Wie bereits erläutert, kann bei kleineren Produkten/Collis vorgesehen werden, diese in einer Pufferstation zwischenzulagern, dort zusammenzuschieben und dann mittels des Greiferkopfes auf dem jeweiligen Turm 24 abzulegen.

Das Beladesystem ist des Weiteren mit einer Zentriereinrichtung 28 ausgeführt, die besonders gut in Figur 2 sichtbar ist. Diese Zentriereinrichtung 28 hat fünf Schiebewände 30a, 30b, 30c, 30d und 30e, die gemäß Figur 1 entlang des Außenumfangs der Beladeplatte 12 angeordnet sind und - ähnlich wie die Greiferplatten 20 - auf einander zu verfahrbar sind, um die Produktstapel/Türme 24 derart zu verschieben, dass sich die Abstände a schließen und die Türme 24 an einander anliegen. D.h. über die Schiebewände 30 erfolgt eine Kompaktierung und Zentrierung der Türme 24 in einer Weise, dass die von den Türmen 24 beanspruchte Grundfläche gleich oder kleiner ist als die Grundfläche der Zielpalette 8'. Nach diesem Zentriervorgang bleiben die Schiebewände 30 in Anlage an den Türmen 24, so dass diese relativ zu einander lagefixiert sind. Die Beladeplatte 12 wird dann entlang einer Führung in Horizontalrichtung (in der Zeichenebene gemäß Figur 3) verfahren oder auseinander gefahren, wobei die Türme 24 stehen bleiben und dann durch Auseinanderfahren der Schiebewände 30 und ggf. einem kleinen Vertikalhub (Z-Richtung) auf der Zielpalette 8' abgelegt werden können.

Die Schiebewände 30a, 30b, 30c, 30d und 30e sind unabhängig von einander verstellbar, so dass die auf der Beladeplatte 12 abgelegten Türme 24 auf das Paletten-Nennmaß inklusive einem Überhang von beispielsweise 25 mm zusammengeschoben werden, bevor diese an die Zielpalette 8 oder ein sonstiges Ladehilfsmittel übergeben werden. Die Schiebewände 30 werden mittels Asynchronantrieben und einer Zahnstangenmechanik verfahren. Dabei sind die Schiebewände 30c, 30d, 30e (siehe Figur 2) als Einheit konstruiert, die mittels eines gemeinsamen Antriebs verfahrbar sind. Die beiden in Figur 2 vorne liegenden Schiebewände 30a, 30b sind schwenkbar gelagert und angetrieben, so dass sie in der dargestellten Position zur Ausschleusung der fertiggestellten Auftragspalette den Transportweg freigeben. D.h. die ausschleusungsseitig ausgebildete Schiebewand ist zweiteilig ausgeführt und lässt sich zum Herausfahren der beladenen Zielpalette 8" öffnen. Diese Verschwenkung erfolgt über eine Gelenkanordnung und ein Zahnstangenantriebe. Dementsprechend hat die dargestellte Zentriereinrichtung 28 sieben Antriebseinheiten (zwei Schwenkantriebe, fünf Linearantriebe), so dass das Zusammenschieben der Türme 24 sehr schnell und mit hoher Präzision erfolgen kann.

Die kommissionierte Palette 8" wird dann über eine Ausschleusebahn 34 ausgeschleust. Dabei kann die kommissionierte Palette 8" mit einer geeigneten Transportsicherung, beispielsweise einem Band oder einer Folie versehen werden. Diese Transportsicherung kann innerhalb der Kommissioniereinheit 14 oder aber auch in einer nachfolgenden Station angebracht werden. In der Darstellung gemäß den Figuren 1 und 2 ist die beladene Zielpalette (kommissionierte Palette 8") lediglich in einem teilweise beladenen Zustand dargestellt. Wie vorstehend erläutert, kann die Gesamthöhe der ausgeschleusten Palette 8" etwa 2 m betragen.

In Figur 3 sind vier Produktstapel/Türme 24 vorgesehen - selbstverständlich kann auch eine andere Anzahl von Türmen auf der Beladeplatte 12 abgelegt werden.

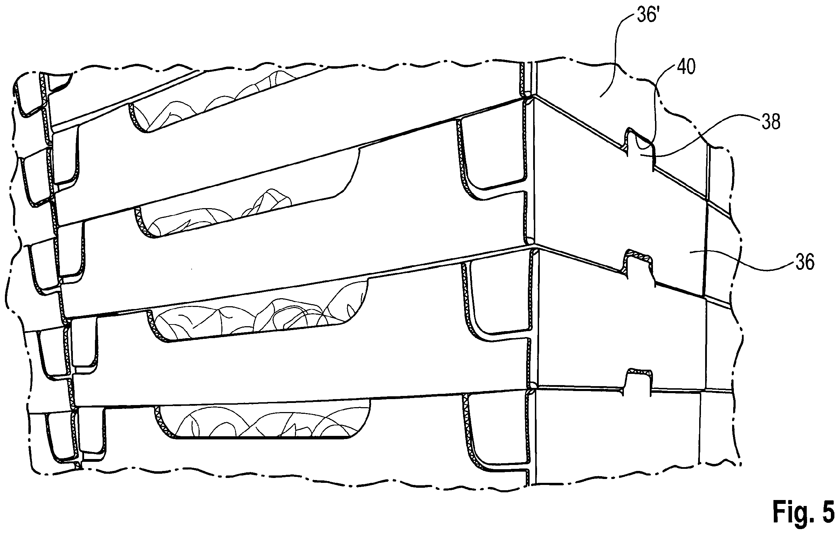

Figur 4 zeigt eine dreidimensionale Einzeldarstellung eines für das erfindungsgemäße Beladesystem 1 geeigneten Greiferkopfs 16, 18. Dieser Greiferkopf 16 ist zum Stapeln von Trays mit rechteckförmigem Grundriss geeignet. Derartige Trays werden beispielsweise für Obst und Gemüse verwendet. Wie in Figur 5 dargestellt, haben derartige Trays 36 beispielsweise im Bereich ihrer oben liegenden Umfangskante eine auskragende Stapelnase 38, die bei einem Produktstapel in eine Stapelausnehmung 40 eines benachbarten Trays 36' eintaucht. Eine entsprechende Zentrieranordnung mit einer Stapelnase und einer Stapelausnehmung ist auch an der gegenüber liegenden Seitenfläche (in Figur 5 nicht sichtbar) der Trays 36, 36' vorgesehen, so dass diese exakt zu einander relativpositioniert sind. Das Stapeln muss demnach so erfolgen, dass die jeweiligen Stapelnasen 38 mit Bezug zu den Stapelausnehmungen 40 ausgerichtet sind.

Der in den Figuren 1 und 2 dargestellte Greiferkopf 16, 18 hat vier Greiferplatten, wobei jeder Seitenwandung des Produktes 2 bzw. des Trays 36 jeweils eine Greiferplatte zugeordnet ist.

Figur 4 zeigt eine Variante, die besonders gut für rechteckförmige Produkte/Trays geeignet ist, die zwei Längsseitenflächen und zwei kürzere Seitenflächen aufweisen. Bei einem derartigen Ausführungsbeispiel sind den Längsseiten des Produktes 2 bzw. des Trays 36 dann jeweils zwei Greiferplatten 20b1, 20b2 bzw. 20d1, 20d2 zugeordnet.

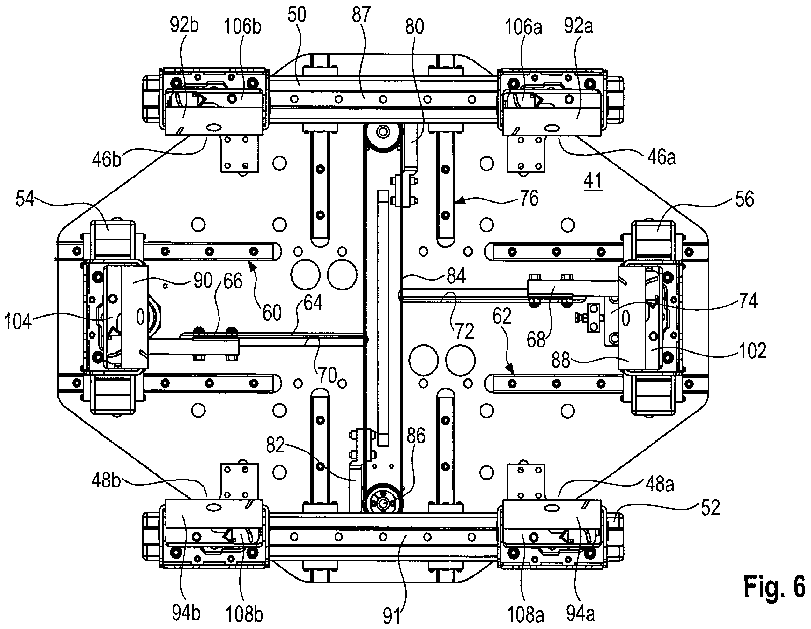

Gemäß der Darstellung in Figur 4 hat der Greiferkopf 16 eine Halte-/Führungsplatte 41, an der die vorgenannten Greiferplatten 20a, 20b, 20c, 20d verstellbar geführt sind. Diese Greiferplatten sind dabei jeweils an einem Greiferarm 42, 44, 46a, 46b und 48a, 48b gehalten, wobei die Greiferarme 42, 44 jeweils der kürzere Seitenfläche des Produktes 2 und die paarweise angeordneten Greiferarme 46a, 46b bzw. 48a, 48b den beiden längeren Seitenflächen zugeordnet sind. Die beiden paarweise angeordneten Greiferarme 46a, 46b und 48a, 48b sind jeweils an einem etwa T-förmigen Doppelschlitten 50, 52 angeordnet, der entlang einer im Folgenden noch beschriebenen Führung verstellbar ist, um den Stützabstand zwischen den beiden Doppelschlitten 50, 52 bzw. den zugehörigen Greiferarmen 46a, 46b und 48a, 48b einzustellen. In entsprechender Weise sind die beiden einzelnen Greiferarme 42, 44 jeweils an einem Einzelschlitten 56, 58 (siehe insbesondere Figur 6) gelagert, die ebenfalls entlang einer Führung verfahrbar sind, um die Greiferplatten 20a, 20c in Anlage an die kürzeren Seitenflächen des Produktes 2/Trays 36 zu bringen. Auch diese Greiferarme 42, 44 sind synchron bewegbar, wobei diese Bewegungsbahn quer zu derjenigen der Doppelschlitten 50, 52 verläuft.

Gemäß der Unteransicht in Figur 6 sind die beiden Einzelschlitten 56, 58 jeweils entlang einer Längsführung 60, 62 geführt, die jeweils aus zwei Führungsschienen besteht, entlang denen die beiden Einzelschlitten 56, 58 verfahrbar sind. Beide Einzelschlitten 56, 58 sind jeweils mit einem in Figur 4 sichtbaren Zahnriemen 64 verbunden, wobei sich jeweils eine Verbindungslasche 66, 68 durch einen Schlitz 70, 72 der Führungsplatte 41 hindurch erstreckt. Der Antrieb des Zahnriemens erfolgt über einen Servomotor 74 (siehe Figur 4), der auf der Führungsplatte 41 befestigt ist.

Die Führung der Doppelschlitten 50, 52 erfolgt entsprechend. Diese sind auf einer quer zur Längsführung 60 verlaufenden Querführung 76, 78 geführt, die jeweils wieder aus zwei parallel angeordneten Führungsschienen besteht, auf denen Gleit- oder Wälzlager geführte Führungseinheiten gelagert sind, die mit den Doppelschlitten 50, 52 verbunden sind.

Die beiden Doppelschlitten 50, 52 sind jeweils über Mitnehmer 80, 82 mit einem weiteren Zahnriemen 84 verbunden, der durch die Führungsplatte 41 hindurch von einem weiteren Servomotor 86 (siehe Figur 4) angetrieben ist. Die Befestigung der Einzelschlitten 56, 58 und der Doppelschlitten 50, 52 an den Zahnriemen 64, 84 erfolgt so, dass sich die jeweils einander zugeordneten Schlitten je nach Drehrichtung des Servoantriebs parallel auf einander zu oder auseinander bewegen, um den Abstand auf die Abmessungen des Produktes 2/Trays 36 einzustellen.

Die beiden an jeweils einem Doppelschlitten 50, 52 gehaltenen Greiferarme 46a, 46b bzw. 48a, 48b sind jeweils auf einer Führungsschiene 87, 91 geführt, so dass deren Abstand verstellbar ist. Diese Verstellung kann ebenfalls elektromotorisch erfolgen, so dass eine einfache Anpassung an unterschiedliche Produktgeometrien ermöglicht ist.

Die dargestellte Konstruktion des Greiferkopfes 16 ermöglicht es, dass alle spezifizierten Collis (Modul und Zwischenmaße, Gewichte, Verpackungsarten) sortenübergreifend, sicher und kontrolliert aufgenommen, transportiert und abgegeben werden können.

Der Greiferkopf 16, 18 ist vorzugsweise als Blech-Schweiß-Konstruktion ausgeführt. Für ein Colli-spezifisches Greifen werden die Greiferarme 42, 44, 46a, 46b und 48a, 48b wie beschrieben servomotorisch angetrieben, wobei eine kraft- oder drehmomentabhängige Regelung vorgesehen sein kann. Mit Hilfe der Servo-Antriebseinheiten inklusive von On-Board-Controllern (CU) auf dem jeweiligen Greiferkopf 16, 18 ist eine Gewichtseinsparung gegenüber üblichen Servoantrieben möglich.

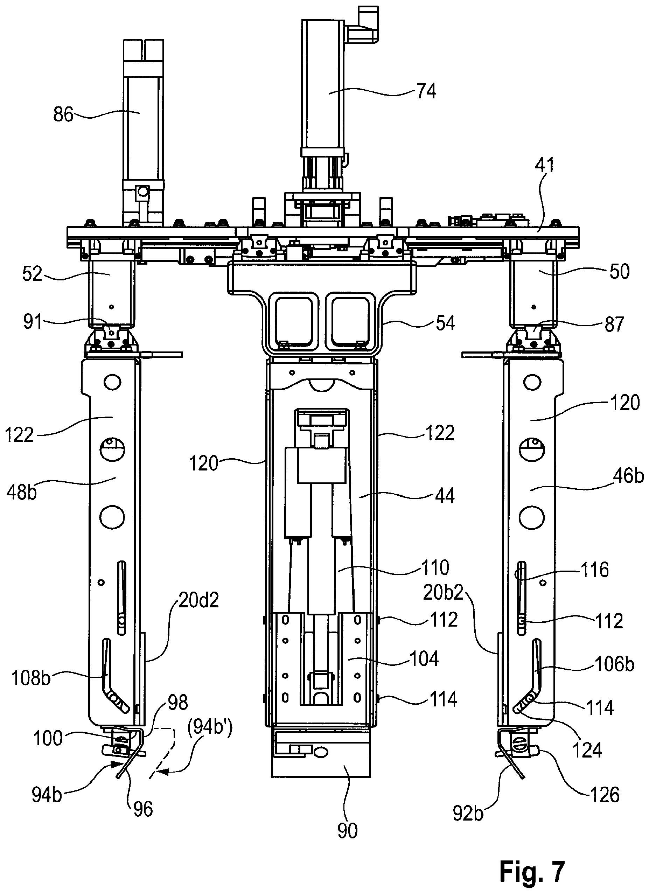

Um einen sicheren Transport der Collis zu gewährleisten, sind an den Greiferarmen 42, 44, 46, 48 jeweils Zentrierwinkel 88, 90, 92a, 92b, und 94a, 94b gehalten, die eine Doppelfunktion erfüllen. In der in den Figuren 4, 6 und 7 dargestellten Position dienen die Zentrierwinkel 88, 90. 92a, 92b, 94a, 94b zur Zentrierung des bereits aufgebauten Turms 24/Produktstapels mit Bezug zu dem am Greiferkopf 16, 18 gehaltenen Produkt/Colli/Tray. In einer in Figur 7 gestrichelt angedeuteten Stützposition fahren die Zentrierwinkel 88, 90, 92a, 92b und 94a, 94b in Richtung zum Colli ein, so dass dieses seitlich von den Greiferplatten 20a, 20b, 20c, 20d und von unten her von den Zentrierwinkeln 88, 90, 92a, 92b und 94a, 94b abgestützt ist.

Bei einer Anordnung gemäß Figur 4 sind somit die in Figur 1 und 2 längsseitigen Greiferplatten 20b, 20d zweiteilig durch jeweils eine Greiferplatte 20b1, 20b2 bzw. 20d1, 20d2 ausgebildet. Die den kürzeren Seitenflächen der Trays zugeordneten Greiferplatten 20a, 20c des Ausführungsbeispiels gemäß Figur 4 entsprechen den Greiferplatten 20a, 20c, wie sie in Figur 1 dargestellt sind.

Wie insbesondere in Figur 7 links dargestellt ist, sind die Zentrierwinkel als Winkelprofil ausgebildet und haben jeweils einen Zentrierschenkel 96, der gegenüber der Vertikalen in Figur 7 schräg angestellt ist, so dass sich der von den Zentrierwinkeln 88, 90, 92, 94 umgriffene Raum nach unten hin erweitert. An den Zentrierschenkel 96 schließt sich nach oben ein Halteschenkel 98 an, der jeweils in der dargestellten Zentrierposition in Verlängerung der jeweiligen Greiferplatte 20a, 20b, 20c, 20d verläuft.

Jeder Zentrierwinkel 88, 90, 92, 94 hat des Weiteren einen Befestigungsschenkel 100, über den die Zentrierwinkel jeweils an einem Schlitten 102, 104, 106a, 106b und 108a, 108b (siehe Figur 2) befestigt ist. Diese Schlitten 102, 104, 106, 108 sind jeweils in Vertikalrichtung innerhalb des als U-Profil ausgeführten Greiferarms 42, 44, 46a, 46b bzw. 48a, 48b geführt. Die Verstellung der Führungsschlitten 102, 104, 106a, 106b bzw. 108a, 108b erfolgt jeweils über einen Linearantrieb, von denen in Figur 7 lediglich der dem Schlitten 102 zugeordnete Linearantrieb mit einem Bezugszeichen 110 versehen ist. Dieser als Servoantrieb ausgeführte Linearantrieb wird ebenfalls wiederum über die gemeinsame Steuereinheit 22 angesteuert. Wie insbesondere aus der Figur 7 hervorgeht, sind die Schlitten über Führungszapfen 112, 114 in Kulissen 116, 118 in Seitenwangen 120, 122 der jeweiligen Greiferarme 42, 44, 46a, 46b und 48a, 48b geführt, wobei beispielhaft lediglich die Seitenwangen 120, 122 in Figur 7 mit Bezugszeichen versehen sind.

Die Kulisse 116, in der der obere Führungszapfen 112 geführt ist, verläuft in Vertikalrichtung parallel zur jeweiligen Greiferplatte 20. Die unten liegende Kulisse 118, in der der zweite Führungszapfen 114 geführt ist, hat einen parallel zur Kulisse 116 verlaufenden Abschnitt und einen angewinkelten Endabschnitt 124 (siehe Figur 7), der sich in Richtung zur jeweiligen Greiferplatte 20a, 20b, 20c, 20d hin erstreckt.

Beim Einfahren des Linearantriebs 110 werden die beiden Führungszapfen 112, 114 entlang der Kulissen 116, 118 in der Darstellung gemäß Figur 7 nach oben, zur Führungsplatte 41 hin verschoben, so dass der jeweilige Zentrierwinkel 88, 90, 92, 94 in das U-Profil des Greiferarms 42, 44, 46 bzw. 48 einfährt, bis die Führungszapfen 112, 114 am jeweiligen Endabschnitt der Kulissen 116, 118 auflaufen.

Beim Ausfahren (nach unten in Figur 7) der Linearantriebe 110 werden die Zentrierwinkel 88, 90, 92, 94 dann entsprechend nach unten bewegt, bis sie zunächst die in den Figuren 4, 6 und 7 dargestellten Positionen erreichen, in denen die Halteschenkel 98 jeweils in Verlängerung der Greiferplatten 20a, 20b, 20c, 20d verlaufen. Der Führungszapfen 114 befindet sich dann bereits in dem angewinkelten Endabschnitt 124 der Kulissen 118. Beim weiteren Ausfahren des Linearantriebs 110 werden die Zentrierwinkel nach innen versetzt und erreichen dann die in Figur 7 gestrichelt angedeutete Stützposition, in der die Zentrierwinkel 88, 90, 92a, 92b und 94a, 94b in den von den Greiferarmen 42, 44, 46a, 46b und 48a, 48b umgriffenen Raum hineinragen, so dass das Collis von unten her abgestützt ist.

D.h. während des Transports von der Zuführbahn 4 zur Beladeplatte 12 wird das jeweilige Colli (Tray 36, Produkt 2) sowohl seitlich über die Greiferplatten 20a, 20b, 20c, 20d als auch in Vertikalrichtung durch die Zentrierwinkel 88, 90, 92a, 92b und 94a, 94b abgestützt.

Insbesondere in der Darstellung gemäß Figur 7 sind noch Sensoren 126 sichtbar, über die das Ende des bereits ausgebildeten Produktstapels erfassbar ist, um eine Kollision des Greiferkopfes 16, 18 mit diesem Produktstapel zu vermeiden. Derartige Sensoren 126 sind vorzugsweise im Bereich jedes Zentrierwinkels 88, 90, 92a, 92b und 94a, 94b vorgesehen.

In dem Fall, in dem ein Trockenwarensegment zu kommissionieren ist, kann die Kommissioniereinheit 14 zusätzlich noch mit einem Gabelkopf (nicht dargestellt) versehen sein, der zum Übernehmen der Trockenware (Produkt 2) auf der Zuführbahn 4 unter das jeweilige Produkt 2 einfährt, dieses von der Zuführbahn 4 abhebt und dann direkt auf der Zielpalette 8' ablegt. In diesem Fall ist dann die Beladeplatte 12 in eine Zwischenposition verfahren, in der sie die Zielpalette 8' nicht überdeckt.

Ein derartiger Gabelkopf hat eine teleskopierbare Gabel, die von einem Roboter oder einem sonstigen Handlingsgerät gehalten wird und in Abhängigkeit von den Produktabmessungen ausfahrbar ist. Prinzipiell ist es auch möglich, auf einer derartigen ausfahrbaren Gabel zwei Produkte neben einander liegend anzuordnen. Hinsichtlich des prinzipiellen Aufbaus eines derartigen Gabelkopfes wird auf den eingangs erläuterten diesbezüglichen Stand der Technik verwiesen.

Der Gabelkopf kann dabei mit einer Messerkante ausgeführt sein, die das Einfahren des Gabelkopfes unter das jeweilige Produkt 2 vereinfacht. Hinsichtlich der Einzelheiten eines derartigen Messerkopfes, der beispielsweise auch mit Bürsten zum Herstellen eines reibschlüssigen Eingriffes ausgeführt sein kann, wird auf die Ausführungen in der eingangs genannten EP 2 794 439 B1 verwiesen.

Die Transportsicherung kann mittels eines in die Kommissioniereinheit 14 integrierten Folienringwicklers erfolgen, der die gestapelten Produkte 2 durch Umwickeln von unten nach oben in der Abfolge der abgesetzten Lagen sichert. Derartige Folienringwickler sind bekannt, so dass weitere Erläuterungen entbehrlich sind.

Über den Packmustergenerator 32 wird je nach Art des Produktes 2 die Kommissioniereinheit 14 so angesteuert, dass die Produkte entweder über die Greiferköpfe 16, 18 auf der Beladeplatte 12 abgesetzt werden oder aber über die Gabelköpfe direkt auf die Zielpalette 8 gestapelt werden. D.h. beide Einheiten (Greiferköpfe, Gabelköpfe) sind alternativ oder aber auch parallel zu einander in Wirkeingriff bringbar, um den jeweiligen Produktstapel herzustellen. So ist es beispielsweise möglich, auf der Zielpalette 8 sowohl Obst- und Gemüsesteigen als auch Trockenwaren zu stapeln.

Selbstverständlich kann die Kommissioniereinheit 14 auch nur mit Greiferköpfen oder nur mit Gabelköpfen ausgeführt sein - die flexibelste Lösung besteht jedoch darin, wenn beide Systeme in die Kommissioniereinheit 14 integriert sind.

Wie eingangs erwähnt, kann durch das erfindungsgemäße Beladesystem das Kommissionieren unterschiedlichster Produkte mit minimalem personellen Aufwand deutlich schneller als bisher durchgeführt werden.

Figur 3 zeigt ein alternatives Transportmittel, mit dem die Leer-/ bzw. Zielpalette 8 ein- und ausgeschleust werden kann, wenn die Palettentransportbahn 6 zum Transport einer derartigen Sonderpalette ungeeigent ist. Dies kann beispielsweise dann der Fall sein, wenn die Zielpalette 8 nicht die Abmessungen einer Europalette aufweist oder ein kleineres Format, wie beispielsweise ein Viertel oder die Hälfte der Abmessungen einer Euro-Palette hat.

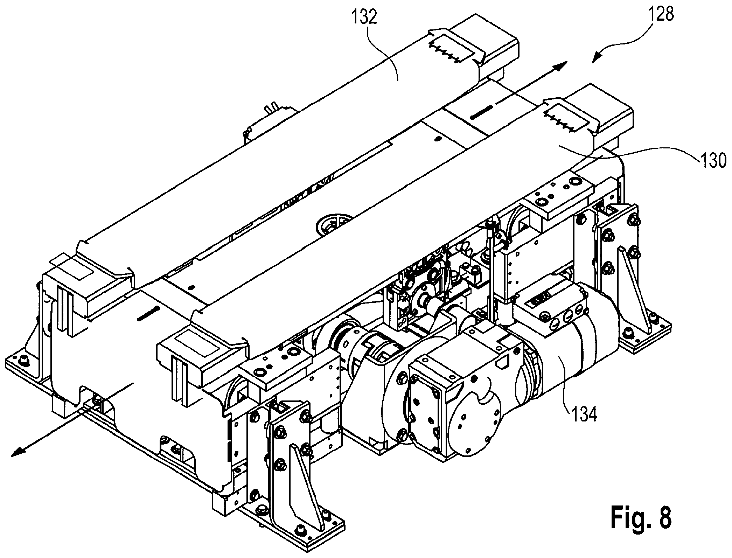

In diesem Fall kann gemäß Figur 8 eine Teleskopgabel 128 verwendet werden, die auf einem geeigneten Transportwagen (nicht dargestellt) befestigt ist. Eine derartige Teleskopgabel 128 hat zwei teleskopierbare Gabeln 130, 132, die mittels eines Servoantriebs 134 wahlweise in beide Pfeilrichtungen (siehe Figur 8) ausfahrbar sind, um eine Leerpalette unter der Beladeplatte 12 zu positionieren oder die Komissionierpalette auszuschleusen. Die Ansteuerung der Gabeln 130, 132 erfolgt über die Steuereinheit 22 bzw. den Packmustergenerator 32.

Offenbart sind ein Kommissionier- oder Beladesystem und ein Greiferkopf für unterschiedliche Produkte, die auf einer Beladeplatte in mehreren Produktstapeln aufgestapelt werden.

### Bezugszeichenliste:

- 1: Beladesystem
- 2: Produkt
- 4: Zuführbahn
- 6: Palettentransportbahn
- 8: Zielpalette
- 10: Palettenmagazin
- 12: Beladeplatte
- 14: Kommissioniereinheit
- 15: Portal
- 16: Greiferkopf
- 18: Greiferkopf
- 20: Greiferplatte
- 22: Steuereinheit
- 24: Turm
- 28: Zentriereinrichtung
- 30: Schiebewand
- 32: Packmustergenerator
- 34: Ausschleusebahn
- 36: Tray
- 38: Stapelnase
- 40: Zentrierausnehmung
- 41: Führungsplatte
- 42: Greiferarm
- 44: Greiferarm
- 46: Greiferarm
- 48: Greiferarm
- 50: Doppelschlitten
- 52: Doppelschlitten
- 56: Einzelschlitten
- 58: Einzelschlitten
- 60: Längsführung
- 62: Längsführung
- 64: Zahnriemen
- 66: Verbindungslasche
- 68: Verbindungslasche
- 70: Schlitz
- 72: Schlitz
- 74: Servomotor
- 76: Querführung
- 78: Querführung
- 80: Mitnehmer
- 82: Mitnehmer
- 84: Zahnriemen
- 86: Servomotor
- 87: Führungsschiene
- 88: Zentrierwinkel
- 90: Zentrierwinkel
- 91: Führungsschiene
- 92: Zentrierwinkel
- 94: Zentrierwinkel
- 96: Zentrierschenkel
- 98: Halteschenkel
- 100: Befestigungsschenkel
- 102: Schlitten
- 104: Schlitten
- 106: Schlitten
- 108: Schlitten
- 110: Linearantrieb
- 112: Führungszapfen
- 114: Führungszapfen
- 116: Kulisse
- 118: Kulisse
- 120: Seitenwange
- 122: Seitenwange
- 124: Endabschnitt Kulisse
- 126: Sensor
- 128: Teleskopgabel
- 130: Gabel
- 132: Gabel
- 134: Servomotor

## Patentansprüche

1. Beladesystem zum Palettieren von gemischten Produkten (2) auf einer Zielpalette (8), mit
- zumindest zwei Zuführbahnen (4) für die zu palettierenden Produkte (2),
- einem Packmustergenerator (32) zum Steuern des Beladesystems nach einem Packmuster in Abhängigkeit von der Art der auf der Zielpalette (8) abzulegenden Produkte (2),
- einer Beladeplatte (12),
- zumindest einem Greiferkopf (16, 18), der ausgelegt ist, in einer vorgegebenen Sequenz jeweils zumindest ein Produkt (2) von einer der Zuführbahnen (4) abzunehmen und auf der Beladeplatte (12) zu stapeln, so dass zumindest zwei, vorzugsweise mehr Produktstapel auf der Beladeplatte (12) angeordnet sind, die in einem Abstand (a) zueinander angeordnet sind, und wobei die Beladeplatte (12) zur Übergabe der zumindest zwei Produktstapel an die Zielpalette (8) in Horizontalrichtung unter den Produktstapeln wegfahrbar oder teilbar ist.

2. Beladesystem nach Patentanspruch 1, wobei die Produktstapel etwa parallel Schicht für Schicht aufgebaut sind, wobei eine Schicht eines Produktstapels mehrere Produkte (2) aufweisen kann, die als Zwischenstapel vom Greiferkopf (16, 18) von der Zuführbahn (4) abgenommen sind.

3. Beladesystem nach einem der vorhergehenden Patentansprüche, mit einer Zentriereinrichtung (28) zum Zusammenschieben der Produktstapel etwa auf das Maß der Zielpalette (8).

4. Beladesystem nach Patentanspruch 3, wobei die Zentriereinrichtung (28) fünf Schiebewände (30a, 30b, 30c, 30d) hat, die in Zusammenschieberichtung verschiebbar geführt sind und von denen zwei zur Freigabe eines Transportweges auseinander verfahrbar sind.

5. Beladesystem nach einem der vorhergehenden Patentansprüche, wobei die Produktstapel von der Zentriereinrichtung (28) während der Übergabe an die Zielpalette (8) gehalten sind.

6. Beladesystem nach einem der vorhergehenden Patentansprüche, wobei der Greiferkopf (16, 18) zumindest vier etwa rechtwinklig zu einander angeordnete Greiferplatten (20a, 20b, 20c, 20d) hat, die zum Halten des Produktes (2) oder eines Produktstapels in seitliche Anlage an dieses bringbar sind und mit einer Führung zum Verfahren des Greiferkopfes (16, 18) in X-, Y- und/oder Z-Richtung.

7. Beladesystem nach Patentanspruch 6, wobei zumindest einer Greiferplatte (20) eine Einrichtung zum Abstützen und zum Zentrieren des Produktes (2) bzw. des Produktstapels zugeordnet ist.

8. Beladesystem nach Patentanspruch 7, wobei jeder Greiferplatte (20) ein Zentrierwinkel (88, 90, 92, 94) zugeordnet ist, der verstellbar an einem die Greiferplatte (20) haltenden Greiferarm (42, 44, 46, 48) geführt ist, so dass vorzugsweise in einer Position des Zentrierwinkels (88, 90, 92, 94) das Produkt (2) abgestützt ist und in einer anderen Position die Zentrierung erfolgt.

9. Beladesystem nach einem der vorhergehenden Patentansprüche, mit einem Gabelkopf, der ausgelegt ist, in einer sich wiederholenden Abfolge zumindest ein Produkt (2) von einer der Zuführbahnen (4) abzunehmen und auf der Zielpalette (8) abzulegen.

10. Beladesystem nach Patentanspruch 9, wobei der Gabelkopf mit einer Messerkante ausgeführt ist.

11. Beladesystem nach einem der vorhergehenden Patentansprüche, mit einem höhenverstellbaren Folienringwickler zum Sichern der Produkte (2).

12. Beladesystem nach einem der vorhergehenden Patentansprüche, wobei zumindest vier parallele Zuführbahnen (4) und eine Ausschleusebahn (34) vorhanden sind, wobei den Zuführbahnen (4) zwei Greiferköpfe (16, 18) und/oder Gabelköpfe zugeordnet sind.

13. Beladesystem nach einem der vorhergehenden Patentansprüche, mit einem Display zum Visualisieren des Packmusters vor oder während der Kommissionierung.

## Claims

1. Loading system for palletizing mixed products (2) on a target pallet (8), having
- at least two infeed conveyors (4) for the products (2) to be palletized,
- a packing pattern generator (32) for controlling the loading system according to a packing pattern depending on the type of products to be placed on the target pallet (8),
- a loading plate (12),
- at least one grab head (16, 18) which is configured to take at least one product (2) from one of the infeed conveyors (4) in a predetermined sequence and to stack it on the loading plate (12),
so that at least two, preferably more, product stacks are arranged on the loading plate and the product stacks are arranged at a distance (a) towards each other and wherein the loading plate (12) is movable away or separable under the product stacks in the horizontal direction for the transfer of the at least two product stacks to the target pallet (8).

2. Loading system according to patent claim 1, wherein the product stacks are constructed level by level approximately parallel, wherein a level of a product stack may comprise a plurality of products (2) taken as intermediate stacks by the grab head (16, 18) from the infeed conveyor (4).

3. Loading system according to one of the preceding patent claims, comprising a centering device (28) for pushing the product stacks together approximately to the size of the target pallet (8).

4. Loading system according to patent claim 3, wherein the centering device (28) comprises five sliding panels (30a, 30b, 30c, 30d) which are slidably guided in the pushtogether direction and two of which can be slid apart to open a transport path.

5. Loading system according to one of the preceding patent claims, wherein the product stacks are preferably held by the centering device (28) during the transfer to the target pallet (8).

6. Loading system according to one of the preceding patent claims, wherein the grab head (16, 18) has at least four grabber plates (20a, 20b, 20c, 20d) which are arranged approximately at right angles to one another and which can be brought into lateral contact with the product (2) or a product stack in order to hold it, and comprising a guiding for moving the grab head (16, 18) in the X, Y, and/or Z direction.

7. Loading system according to patent claim 6, wherein at least one grabber plate (20) is assigned a device for supporting and centering the product (2) or the product stack.

8. Loading system according to patent claim 7, wherein each grabber plate (20) is assigned a centering bar (88, 90, 92, 94) which is adjustably guided on a grabber arm (42, 44, 46, 48) holding the grabber plate (20), so that the product (2) is preferably supported in one position of the centering bar (88, 90, 92, 94) and the centering takes place in another position.

9. Loading system according to one of the preceding patent claims, comprising a fork head which is configured to take, in a repeating sequence, at least one product (2) from one of the infeed conveyors (4) and to place it on the target pallet (8).

10. Loading system according to patent claim 9, wherein the fork head is configured with a knife edge.

11. Loading system according to one of the preceding patent claims, comprising a height-adjustable foil ring winder for securing the products (2).

12. Loading system according to one of the preceding patent claims, wherein at least four parallel infeed conveyors (4) and a discharge belt (34) are present, wherein two grab heads (16, 18) and/or fork heads are associated with the infeed conveyors (4).

13. Loading system according to one of the preceding patent claims, with a display for visualizing the packing pattern before or during picking.

## Revendications

1. Système de chargement pour la palettisation de produits mélangés (2) sur une palette cible (8), avec
- au moins deux bandes d'amenée (4) pour les produits (2) à palettiser,
- un générateur de modèles d'emballage (32) pour la commande du système de chargement selon un
modèle d'emballage en fonction du type de produits (2) à déposer sur la palette cible (8),
- une plaque de chargement (12),
- au moins une tête de préhension (16, 18) qui est conçue afin d'enlever dans une séquence prédéfinie respectivement au moins un produit (2) d'une des bandes d'amenée (4) et de l'empiler sur la plaque de chargement (12),
de sorte qu'au moins deux, de préférence plus, piles de produit soient agencées sur la plaque de chargement (12) qui sont agencées à une distance (a) les unes des autres,
et dans lequel la plaque de chargement (12) est déplaçable ou séparable pour le transfert des au moins deux piles de produits à la palette cible (8) dans le sens horizontal sous les piles de produit.

2. Système de chargement selon la revendication 1, dans lequel les piles de produits sont constituées à peu près parallèlement couche par couche, dans lequel une couche d'une pile de produits peut présenter plusieurs produits (2) qui sont enlevés comme pile intermédiaire par la tête de préhension (16, 18) de la bande d'amenée (4).

3. Système de chargement selon l'une quelconque des revendications précédentes, avec un dispositif de centrage (28) pour le coulissement des piles de produits à peu près à la mesure de la palette cible (8).

4. Système de chargement selon la revendication 3, dans lequel le dispositif de centrage (28) présente cinq parois coulissantes (30a, 30b, 30c, 30d) qui sont guidées de manière coulissante dans le sens de coulissement et dont deux sont déplaçables pour la libération d'une voie de transport l'une de l'autre.

5. Système de chargement selon l'une quelconque des revendications précédentes, dans lequel les piles de produits sont maintenues par le dispositif de centrage (28) pendant le transfert à la palette cible (8).

6. Système de charge selon l'une quelconque des revendications précédentes, dans lequel la tête de préhension (16, 18) présente au moins quatre plaques de préhension (20a, 20b, 20c, 20d) agencées à peu près à angle droit les unes aux autres qui peuvent être amenées pour le maintien du produit (2) ou d'une pile de produits en appui latéral contre celui-ci et avec un guidage pour le déplacement de la tête de préhension (16, 18) dans le sens X, Y et/ou Z.

7. Système de chargement selon la revendication 6,
dans lequel à au moins une plaque de préhension (20) est associé à un dispositif pour l'appui et pour le centrage du produit (2) ou de la pile de produits.

8. Système de chargement selon la revendication 7, dans lequel à chaque plaque de préhension (20) est associé un angle de centrage (88, 90, 92, 94) qui est guidé de manière réglable au niveau d'un bras de préhension (42, 44, 46, 48) maintenant la plaque de préhension (20) de sorte que de préférence dans une position de l'angle de centrage (88, 90, 92, 94), le produit (2) soit en appui et dans une autre position, le centrage soit effectué.

9. Système de chargement selon l'une quelconque des revendications précédentes, avec une tête de fourche qui est conçue afin d'enlever dans une suite se répétant au moins un produit (2) d'une des bandes d'amenée (4) et de le déposer sur la palette cible (8).

10. Système de chargement selon la revendication 9,
dans lequel la tête de fourche est réalisée avec une arête de couteau.

11. Système de chargement selon l'une quelconque des revendications précédentes, avec un enrouleur d'anneau de film réglable en hauteur pour la fixation des produits (2).

12. Système de chargement selon l'une quelconque des revendications précédentes, dans lequel au moins quatre bandes d'amenée (4) parallèles et une bande d'éclusage (34) sont présentes, dans lequel deux têtes de préhension (16, 18) et/ou têtes de fourche sont associées aux bandes d'amenée (4).

13. Système de chargement selon l'une quelconque des revendications précédentes, avec un écran pour la visualisation du modèle d'emballage avant ou pendant la préparation des commandes.
